(19) Europäisches Patentamt
European Patent Office
Office européen des brevets

(11) EP 0 718 352 B1

(12) EUROPEAN PATENT SPECIFICATION

(45) Date of publication and mention of the grant of the patent:
**03.05.2000 Bulletin 2000/18**

(51) Int. Cl.[7]: **C08K 5/10**, C08K 5/42, C08J 5/18

(21) Application number: **94120251.7**

(22) Date of filing: **21.12.1994**

# (54) Antistatic resin composition and antistatic oriented film

Antistatische Harzzusammensetzung und antistatischer orientierter Film

Composition de résine antistatique et film antistatique orienté

(84) Designated Contracting States:
**DE FR GB IT NL**

(43) Date of publication of application:
**26.06.1996 Bulletin 1996/26**

(73) Proprietor:
**IDEMITSU KOSAN COMPANY LIMITED**
**Tokyo (JP)**

(72) Inventor: **Uchida, Takaaki**
**Ichihara-shi, Chiba-ken (JP)**

(74) Representative:
**Gille Hrabal Struck Neidlein Prop Roos**
**Patentanwälte**
**Brucknerstrasse 20**
**40593 Düsseldorf (DE)**

(56) References cited:
**EP-A- 0 210 655**
**EP-A- 0 382 064**
**DE-A- 1 669 709**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 718 352 B1

Printed by Xerox (UK) Business Services
2.16.7 (HRS)/3.6

## Description

BACKGROUND OF THE INVENTION

1. Field of the Invention

The present invention relates to an antistatic resin composition useful for the production of electronic machinery, apparatus and parts; self-adhesive tapes for industrial application; heat-resistant packing materials, packing materials for pharmaceuticals and the like and further to an antistatic oriented film useful for use in base materials of self-adhesive tapes for industrial application, films and sheets for food packing materials and the like.

2. Description of the Related Arts.

A styrenic polymer which has a high degree of syndiotactic configuration (hereinafter sometimes referred to as "SPS") is excellent in heat resistance and solvent resistance. Thus, the oriented film made therefrom has a high modulus of elasticity and high transparency in addition to the above-mentioned resistances and properties and accordingly, is expected to find a variety of applications. However, since the SPS itself is a good dielectric substance and is liable to be statically electrified, various troubles or difficulties are sometimes caused by the static electricity at the time of molding SPS or using a product made of SPS. Therefore, in order to enable SPS to expand a wide variety of application, the above-mentioned electrostatic problem has been necessary to be solved.
As a method for imparting antistatic properties to a high molecular material or a film made therefrom, mention may be made of (1) a method in which various surfactants are melt-kneaded with a high molecular material, (2) a method in which various surfactants are applied to the surface of a SPS molding or a film made from SPS, (3) a method in which a hydrophilic group is introduced into a molding or film of SPS by chemically treating the surface of a SPS molding or a film made of SPS, and the like methods. With regard to the method (1), any of the additives which have heretofore been used for polyolefins and the like is decomposed and vaporized at a molding temperature of the SPS, that is, 290 to 320°C, making it difficult to manifest the effect as the additive, while great difficulties arise in simply and conveniently imparting antistatic properties by the use of an additive to the SPS, since it is a crystalline resin and has a glass transition temperature higher than room temperature. Moreover, in imparting antistatic properties to a film made from a high molecular material, it is difficult to obtain an antistatic film having a high modulus of elasticity and high transparency. The methods (2) and (3) involve the problem with the productivity and production cost of the films because of the necessity for the additional and extra step in the production process of the films, whereby the films are required to be imparted with antistatic performance from the side of the constitutional material instead of coating or chemical treatment.
EP-A-0210655 and DE-A-1669709 disclose antistatic resin compositions of atactic polystyrene.
EP-A-0382064 discloses syndiotactic polystyrene resin compositions comprising a metal salt of an organic acid as a nucleating agent.

SUMMARY OF THE INVENTION

As a result of intensive research and investigation made by the present inventors under such circumstances, it has been found that the above-mentioned problems of the prior arts are eliminated and that there are obtained an antistatic resin composition capable of manifesting excellent antistatic properties at the time of molding the SPS and using a product made of the SPS, while preserving the characteristics inherent in the SPS such as heat resistance and solvent resistance, and also an oriented film excellent in heat resistance, solvent resistance, transparency and antistatic properties and having enhanced mechanical properties. The present invention has been accomplished by the aforesaid finding and information.
Specifically, the present invention provides an antistatic resin composition which comprises 95 to 99.5% by weight of an (A) styrenic polymer having a high degree of syndiotactic configuration and 0.5 to 5.0% by weight of a (B) polyhydric alcohol-fatty acid ester having an HLB value of 6 to 9; an antistatic resin composition which comprises 98.5 to 99.9% by weight of an (A) styrenic polymer having a high degree of syndiotactic configuration and 0.1 to 1.5% by weight of a (C) an antistatic agent as defined in claim 2; an antistatic resin composition which comprises 88.5 to 99.475% by weight of an (A) styrenic polymer having a high degree of syndiotactic configuration, 0.5 to 5.0% by weight of a (B) polyhydric alcohol-fatty acid ester having an HLB value of 6 to 9 and 0.025 to 6.5% by weight of a (C) metallic salt of an organosulfonic acid; and further an antistatic oriented film which comprises any one of the above-mentioned antistatic resin compositions.

DESCRIPTION OF PREFERRED EMBODIMENT

The styrenic polymer to be used as the component (A) in the present invention has a high degree of syndiotactic configuration.

Here, the styrenic polymer which has a high degree of syndiotactic configuration means that its stereochemical structure is of high degree of syndiotactic configuration, i,e. the stereostructure in which phenyl groups or substituted phenyl groups as side chains are located alternately at opposite directions relative to the main chain consisting of carbon-carbon bonds. The tacticity thereof is quantitatively determined by the nuclear magnetic resonance method ($^{13}$C-NMR method) using carbon isotope. The tacticity as determined by the $^{13}$C-NMR method can be indicated in terms of proportions of structural units continuously connected to each other, i.e., a diad in which two structural units are connected to each other, a triad in which three structural units are connected to each other and a pentad in which five structural units are connected to each other. The SPS as mentioned in the present invention usually means polystyrene, poly(alkylstyrene), poly(halogenated styrene), poly(alkoxystyrene), poly(vinyl benzoate), the mixture thereof, and copolymers containing the above polymers as main components, having such a syndiotacticity that the proportion of racemic diad is at least 75%, preferably at least 85%, or the proportion of racemic pentad is at least 30%, preferably at least 50%. The poly(alkylstyrene) includes poly(methylstyrene), poly(ethylstyrene), poly(isopropylstyrene), poly(tert-butylstyrene). Poly(halogenated styrene) includes poly(chlorostyrene), poly(bromostyrene), and poly(fluorostyrene). Poly(alkoxystyrene) includes poly(methoxystyrene), and poly(ethoxystyrene).

Particularly desirable styrenic polymers are polystyrene, poly(p-methylstyrene), poly(m-methylstyrene), poly(p-tert-butylstyrene), poly(p-chlorostyrene), poly(m-chlorostyrene), poly(p-fluorostyrene), and the copolymer of styrene and p-methylstyrene.

The molecular weight of the styrenic polymer having a high degree of syndiotactic configuration (SPS) to be used in the present invention is not specifically limited, but is desirably 10,000 or more, particulary desirably 50,000 or more in terms of weight-average molecular weight. The molecular-weight distribution, that is, the broadening of the molecular weight of SPS is not specifically limited as well, but may be in a wide range. Having a melting point of 200 to 300°C, the SPS is surpassingly superior in heat resistance to the conventional styrenic polymer having atactic configuration.

Such SPS can be produced by polymerizing a styrenic monomer which corresponds to the SPS in the presence or absence of a solvent such as an inert hydrocarbon by the use of a catalyst comprising a titanium compound and a condensation product of water and a trialkylaluminum.

The resin composition and oriented film each according to the present invention contain a polyhydric alcohol-fatty acid ester as the component (B). As the polyhydric alcohol, mention is made of ethylene glycol, diethylene glycol, monoglyceride, polyglyceride, trimethylol propane, pentaerythritol, sorbitol and the like. Thus, esters of the above-exemplified polyhydric alcohols and various fatty acids are taken into consideration. As the component (B) of the present invention, the above-mentioned esters are required to have high heat resistance, since the molding temperature of the SPS is as high as 290 to 320°C. The suitable ester for this purpose is a polyglyceride ester which is based on a glyceride-fatty acid ester and has a median of glyceride polymerization degree of 6 in its polymerisation degree distribution, among which is most suitable the one having an HLB value of 6 to 9, especially 7 to 8, taking into consideration its hydrophilic nature, compatibility with SPS and the transference to the surface of moldings. An HLB value in the aforesaid ester of less than 6 results in failure to manifest antistatic performance, whereas that more than 9 leads to failure to manifest the effect corresponding to the amount of the ester added.

By the term HLB value as used herein is meant a index pointing out the balance between the hydrophilic nature and lipophilic nature for a given compound. The hydrophilic nature increases with increased HLB value. In general, the HLB value of a polydydric alcohol-based ester is calculated from the following Griffin's empirical formula

$$HLB = 20 X (1-SV/NV)$$

wherein SV is saponification value of an ester, that is, the amount of potassium hydroxide in milligram (mg) required to neutralize 1 g of the ester and NV is neutralization value of a fatty acid, that is, the amount of potassium hydroxide in mg required to neutralize 1 g of the fatty acid.

The amount of the polyhydric alcohol-fatty acid ester as the component(B) to be added to the resin composition is 0.5 to 5.0%,preferably 1.5 to 3.0% by weight. An amount thereof less than 0.5% by weight results in failure to sufficiently manifest antistatic performance, whereas that more than 5.0% by weight becomes responsible for the deterioration of the mechanical strength, surface tackiness of a molding and poor appearance thereof.

The antistatic resin composition and antistatic oriented film according to the another aspect of the present invention comprises a metallic salt of an organosulfonic acid as the component (C) along with or in place of the component (B), that is, a polyhydric alcohol-fatty acid ester.

Examples of the organosulfonic acid include alkanesulfonic acid, α-olefinsulfonic acid, alkylbenzenesulfonic

acid, alkylnaphthalenesulfonic acid, alkylethersulfonic acid, alkylphenylethersulfonic acid, alkyldiphenyldisulfonic acid, sulfosuccinic acid, dialkylsulfosuccinic acid, 2-methylamionoethanesulfonic acid (N-methyltaurine) and a condensation product of β-naphthalenesulfonic acid. Examples of the metallic salt include lithium salt, sodium salt and potassium salt. Being required to be highly heat resistant, the metallic salt of an organosulfonic acid as the component (C) is preferably a metallic salt of a straight-chain alkylsulfonic acid or that of an alkylarylsulfonic acid, each having 10 to 20 carbon atoms, particularly preferably a sodium salt of a straight-chain alkanesulfonic acid which manifests antistatic effect even in a small amount.

The amount of the metallic salt of an organosulfonic acid as the component (C) to be added to the resin composition is 0.025 to 6.5%, preferably 0.1 to 1.5% by weight. An amount thereof less than 0.025% by weight leads to failure to sufficiently achieve antistatic effect, whereas that more than 6.5% by weight causes not only surface tackiness and poor appearance of a molding due to excessive bleeding on the surface of the molding but also deterioration of the mechanical strength.

When the component (C) is used alone an antistatic agent it underlies the limitations required by claim 2.

As described hereinbefore, in the resin composition and the oriented film according to the present invention, both the components (B) and (C) can be used in combination and in addition, such a combined use enables the addition amounts of both the components to be suppressed to the low levels within the aforestated ranges.

The present composition may be incorporated in addition to the aforestated components (A) to (C), with a generally used additive such such as a thermoplastic resin, rubber, an antioxidant, a flame retardant, an inorganic filler, a crosslinking agent, a crosslinking aid, a nucleating agent, a plasticizer, a compatibilizing agent, a colorant and the like to form a composition to the extent that the object of the present invention is not impaired thereby.

Examples of the aforementioned thermoplastic resin include styrenic polymer such as atactic polystyrene, isotactic polystyrene, AS (acrylonitrile-styrene) resin and ABS (acrylonitrile-butadiene-styrene) resin; polyester such as polyethylene terephthalate; polyether such as polycarbonate, polyphenylene oxide, polysulfone and polyether sulfone; condensation type polymer such as polyamide, polyphenylene sulfide (PPS) and polyoxymethylene; acrylic polymer such as polyacrylic acid, polyacrylic acid ester and polymethyl methacrylate; polyolefin such as polyethylene, polypropylene, polybutene, poly-4-methylpentene-1 and ethylene/propylene copolymer; halogenated vinyl compound polymer such as polyvinyl chloride, polyvinylidene chloride and polyvinylidene fluoride; and mixtures thereof.

There are available a variety of rubbers, of which is most suitable a rubbery copolymer comprising a styrenic compound as one of the components. Examples thereof include styrene/butadiene block copolymer rubber in which the butadiene segment is partially or totally hydrogenated (SEBS), styrene/butadiene copolymer rubber (SBR), methyl acrylate/butadiene/styrene copolymer rubber, acrylonitrile/butadiene/styrene copolymer rubber (ABS rubber), acrylonitrile/alkyl acrylate/butadiene/styrene copolymer rubber (AABS), methyl methacrylate/alkyl acrylate/styrene copolymer rubber (MAS), methyl methacrylate/alkyl acrylate/butadiene/styrene copolymer rubber (MABS) and mixtures thereof. The rubbery copolymer comprising a styrenic compound as one of the components has favorable dispersibility in a styrenic polymer having a high degree of syndiotactic configuration because of its having a styrenic unit and as a result is markedly improved in physical properties.

Other examples of usable rubbers in addition to the foregoing include natural rubber, polybutadiene, polyisoprene, polyisobutylene, neoprene, ethylene/propylene copolymer rubber, polysulfide rubber, thiokol rubber, acrylic rubber, urethane rubber, silicone rubber, epichlorohydrin rubber, polyether-ester rubber, polyester ester rubber and mixtures thereof.

There are available a variety of antioxidants, of which are preferable phosphorus-based antioxidants including mono/di-phosphite such as tris(2,4-di-tert-butylphenyl) phosphite, tris(mono/di-nonylphenyl)phosphite and phenolic antioxidant.

The preferably usable diphosphites include the phosphorus-based compound represented by the general formula

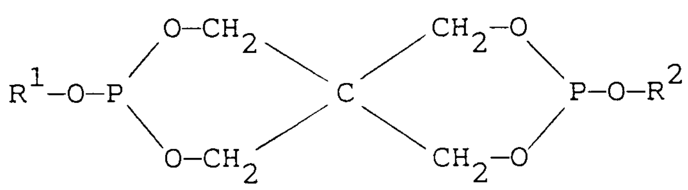

wherein $R^1$ and $R^2$ are each independently an alkyl group having 1 to 20 carbon atoms, a cycloalkyl group having 3 to 20 carbon atoms or an aryl group having 6 to 20 carbon atoms.

Specific examples of the phosphorus-based compound represented by the above-mentioned general formula include distearyl pentaerythritol diphosphite, dioctyl pentaerythritol diphosphite, diphenyl pentaerythritol diphosphite, bis(2,4-di-tert-butylphenyl) pentaerythritol diphosphite, bis(2,6-di-tert-butyl-4-methylphenyl) pentaerythritol diphosphite and dicyclohexyl pentaerythritol diphosphite.

The known phenolic antioxidants may be used and are specifically enumerated by 2,6-di-tert-butyl-4-methylphenol; 2,6-diphenyl-4-methoxyphenol; 2,2'-methylenebis(6-tert-butyl-4-methylphenol); 2,2'-methylenebis 4-methyl-6-(α-methylcyclohexyl)phenol ; 1-1-bis(5-tert-butyl-4-hydroxy-2-methylphenyl)butane; 2,2'-methylenebis(4-methyl-6-cyclohexylphenol); 2,2'-methylenebis-(4-methyl-6-nonylphenol; 1,1,3-tris-(5-tert-butyl-4-hydroxy-2-methylphenyl)butane; 2,2-bis-(5-tert-butyl-4-hydroxy-2-methylphenyl)-4-n-dodecylmercaptobutane; ethyleneglycol-bis [3,3-bis(3-tert-butyl-4-hydroxyphenyl)butyrate]; 1-1-bis(3,5-dimethyl-2-hydroxyphenyl)-3-(n-dodecylthio)-butane; 4,4'-thiobis(6-tert-butyl-3-methylphenol); 1,3,5-tris(3,5-di-tert-butyl-4-hydroxybenzyl)-2,4,6-trimethylbenzene; 2,2-bis(3,5-di-tert-butyl-4-hydroxybenzyl)dioctadecyl malonate; n-octadecyl-3-(4-hydroxy-3,5-di-tert-butylphenyl)propionate; and tetrakis-[methylene(3,5-di-tert-butyl-4-hydroxyhydrocinnamate] methane.

As the antioxidant other than the aforementioned phosphorus-based antioxidants and phenolic antioxidants, there may be used an amine-based antioxidant, a sulfur-based antioxidant or the like alone or in combination with an other antioxidant.

The amount of any of the above-mentioned antioxidants to be employed is usually 0.0001 to 1 part by weight per 100 parts by weight of the above SPS. An amount thereof less than 0.0001 part by weight remarkably lowers the molecular weight of the SPS, whereas that exceeding 1 part by weight adversely affect the mechanical strength of the SPS molding to be produced, each leading to an unfavorable result.

There may be used a wide variety of inorganic fillers, whether in the form of fiber, granule or powder. Examples of the inorganic filler in the form of fiber include glass fiber, carbon fiber and alumina fiber. On the other hand, examples of the inorganic filler in the form of granule or powder include talc, carbon black, graphite, titanium dioxide, silica, mica, calcium carbonate, calcium sulfate, barium carbonate, magnesium carbonate, magnesium sulfate, barium sulfate, oxysulfate, tin oxide, alumina, kaolin, silicon carbide and metallic powder.

As the crosslinking agent, there may be used a proper amount of a hydroperoxide such as tert-butylhydroperoxide; cumene hydroperoxide; diisopropylbenzene peroxide; 2,5-dimethyl-2,5-dihydroperoxyhexane; and 2,5-dimethyl-2,5-dihydroperoxyhexane-3, an dialkylperoxide, a ketone peroxide, a dialkylperoxide, a peroxyester or the like.

As the crosslinking aid, there may be suitably employed a quinone dioxime such as p-quinone dioxime; and p,p-dibenzoylquinone dioxime, a methacrylate such as polyethylene glycol dimethacrylate, an allyl compound, a maleimide compound or the like.

The resin composition according to the present invention can be prepared by melting and kneading the SPS and the above-mentioned components by means of a single-screw extruder, twin-screw extruder or a mixer such as a kneader. The composition thus prepared is subjected to press molding, injection molding or extrusion to prepare a prescribed molding.

The oriented film according to the present invention can be prepared by melting and kneading the SPS and the above-mentioned components by means of a single-screw extruder, twin-screw extruder or a mixer such as a kneader to make an antistatic composition in the form of pellet, followed by extrusion by the use of a T-die or a circular die. Examples of the orientation method include uniaxial orientation with fixed end, uniaxial orientation with free end, consecutive biaxial orientation and simultaneous biaxial orientation without any specific limitation. In the molding method by the use of a T-die, an unoriented film or sheet is prepared firstly, followed by orientation as mentioned above. The molding method by the use of a circular die is carried out by orientation film forming typified by inflation molding. For the purpose of enhancing the mechanical properties of a film, consecutive biaxial orientation using a heating roll or a tenter is preferable. The oriented film thus obtained may be heat treated at a temperature in the range of 200 to 260°C preferably for 1 to 30 sec. as the treatment time. Such heat treatment can further enhance the heat resistace, solvent resistance and antistatic properties of the oriented film.

The resin composition according to the present invention exhibits excellent antistatic properties, and has a high mechanical strength and favorable appearance when made into a molding. Also, the oriented film according to the present invention exerts not only excellent antistatic properties but also high heat resistance, solvent resistance, transparency and mechanical strength.

Accordingly, the antistatic resin composition of the present invention is effectively utilized as raw materials for injection molded articles and extruded articles used for daily sundries, electronic machinery, apparatus and parts and the like. Also, the antistatic oriented film of the present invention is effectively utilized as films and sheets for base materials of self-adhesive tapes for industrial application, films and sheets for heat-resistant packing materials, packing materials for pharmaceuticals, food, etc. and the like.

In the following, the present invention will be described in more detail with reference to reference example, preparation examples, working examples and comparative examples, all of which however, shall not be construed to limit the present invention thereto.

The evaluation of each of the properties of the resin composition, moldings and films was carried out by the following methods.

(1) Surface resistivity

This is used for evaluating antistatic properties of a material, which are enhanced with lowering in the surface resistivity value. In general, a surface resistivity of a hydrophobic resin material is in a level of $10^{15}\Omega$, but is required to be lowered to a level of $10^{12}$ to $10^{13}\Omega$ in order to prevent the troubles under static conditions such as scale deposition and further to a level of $10^{10}$ to $10^{11}\Omega$ for the purpose of attaining antistatic performance in an atmosphere of statical electrification at all times due to friction or the like, so called under dynamic conditions.

The practical measurement was carried out according to ASTM D-257 by a method wherein a resin composition in the form of sheet molding or an oriented film was allowed to stand at 23°C and at a relative humidity of 50% for 24 hours and thereafter tested by means of a resistivity measuring instrument (produced by Yokogawa-Hewlett-Packard, Ltd.)

(2) Mechanical properties

A sheet molding was cut into test pieces of 140 mm by 15 mm by 1 mm in length, width and thickness, respectively, which were subjected to tensile test according to JIS 2-1702 to evaluate the tensile modulus of elasticity, break strength and break elongation.

An oriented film was subjected to tensile test according to JIS 2-1702 to evaluate the tensile modulus of elasticity, break strength and break elongation.

(3) Surface appearance

The surface appearance of a sheet molding or an oriented film was visually evaluated for its surface roughness, surface tackiness due to additives and the like. The results were marked with O for being good and with X for being poor.

(4) Transparency

Transparency of a sheet or film was measured according to ASTM D1003.

Reference Example 1

In a 500 milliliter (hereinafter abbreviated to mL) glass vessel which had been purged with argon were placed 17 g (71 mmol) of copper sulfate pentahydrate($CuSO_4$ $5H_2O$), 200 mL of toluene and 24 mL (250 mmol) of trimethylaluminum, which were then reacted at 40°C for 8 hours. Subsequently, the solids were separated from the reaction mixture to obtain 6.7 g of a contact product. The molecular weight thereof as determined by the freezing point depression method was 610.

Preparation Example 1

In a 2 liter (hereinafter abbreviated to "L") reaction vessel were placed 1L of purified styrene, the contact product as obtained in the above Reference Example 1 in an amount of 7.5 mmol as aluminum atom, 7.5 mmol of triisobutylaluminum and 0.038 mmol of pentamethylcyclopentadienyltitanium trimethoxide, which were then subjected to polymerization reaction, at 90°C for 5 hours. After the completion of the reaction, the catalytic components were decomposed with a solution of sodium hydroxide in methanol and then the reaction product was washed with methanol repeatedly and dried to afford 466 g of polymer. As the result of analysis by gel permeation chromatography using 1,2,4-trichlorobenzene at 13°C as the solvent, the polymer thus produced had a weight-average molecular weight of 290,000 and a ratio of weight-average molecular weight to number-average molecular weight of 2.72.

It was confirmed that the polymer thus obtained was SPS from the results of melting point measurement and $^{13}C$-NMR analysis using carbon isotope.

Preparation Example 2

The procedure in Preparation Example 1 was repeated except that there was used as starting material monomers, 950 mL of purified styrene and 50 mL of p-methylstyrene to carry out copolymerization.

It was confirmed from $^{13}C$-NMR analysis that the resultant copolymer was of cosyndiotactic configuration and contained 9.5 mol% of p-methylstyrene unit. It had a weight-average molecular weight of 438,000 and a ratio of weight-average molecular weight to number-average molecular weight of 2.51.

Example 1

The powdery styrenic polymer obtained in the above Preparation Example 1 was dried at 150°C for 2 hours with stirring and then incorporated, as an additive, with a polyglyceride-stearic acid triester having a median of glyceride polymerization degree of 6 in its polymerization degree distribution and having an HLB value of 7 (produced by Sakamoto Yakuhin Kogyo Co., Ltd. under the tradename "SY Glystar TS-500") in such an amount as occupies 3% by weight based on the resin composition. The resultant mixture was melt extruded at a melting temperature of 300°C by means of a twin-screw extruder equipped with a die with a plurality of capillaries at the end thereof, cooled and cut off to prepare a composition in the form of pellet. The resultant composition was made into a sheet molding of 140 mm by 140 mm by 1 mm in size by press forming at 300°C, 70 $kgf/cm^2$ for 4 minutes. The molding was allowed to stand in an atmosphere of 23°C and 50% relative humidity for 24 hours, and thereafter was evaluated for surface resistivity, tensile modulus of elasticity, break strength, break elongation, and surface appearance. The results are given in Table 1.

Example 2

The procedure in Example 1 was repeated to prepare a molding in the form of sheet, and evaluated the same except that there was used the powdery styrenic polymer as obtained in Preparation Example 2. The results are given in Table 1.

Example 3

The procedure in Example 1 was repeated to prepare a molding in the form of sheet, and evaluated the same except that there was blended as an additive, a sodium salt of a straight-chain alkanesulfonic acid having 12 carbon atoms (produced by Toho Chemical Industry Co., Ltd. under the tradename ANSTEX-SAS) in such an amount as occupies 1.5% by weight based on the resin composition. The results are given in Table 1.

Example 4

The procedure in Example 1 was repeated to prepare a molding in the form of sheet, and evaluated the same except that there were used in combination, as additives, 0.1% by weight of a sodium salt of a straight-chain alkanesulfonic acid having 12 carbon atoms and 2.0% by weight of a polyglyceride-stearic acid ester having a median of glyceride polymerization degree of 6 in its polymerization-degree distribution and having an HLB value of 7. The results are given in Table 1.

Comparative Example 1

The procedure in Example 1 was repeated to prepare a molding in the form of sheet and evaluated the same except that there was blended as an additive, a polyglyceride-stearic acid ester having a median of glyceride polymerization degree of 6 in its polymerization-degree distribution and having an HLB value of 5 in an amount of 3.0% by weight based on the resin composition. The results are given in Table 1.

Comparative Example 2

The procedure in Example 1 was repeated to prepare a molding in the form of sheet and evaluated the same except that there was blended as an additive, a polyglyceride-stearic acid ester having a median of glyceride polymerization degree of 6 in its polymerization-degree distribution and having an HLB value of 12 in an amount of 3.0% by weight based on the resin composition. The results are given in Table 1.

Comparative Example 3

The procedure in Example 1 was repeated to prepare a molding in the form of sheet and evaluated the same except that there was blended as an additive, a polyglyceride-stearic acid ester having a median of glyceride polymerization degree of 6 in its polymerization-degree distribution and having an HLB value of 7 in an amount of 0.3% by weight based on the resin composition. The results are given in Table 1.

Comparative Example 4

The procedure in Example 1 was repeated to prepare a molding in the form of sheet and evaluated the same

except that there was blended as an additive, a polyglyceride-stearic acid ester having a median of glyceride polymerization degree of 6 in its polymerization-degree distribution and having an HLB value of 7 in an amount of 7.0% by weight based on the resin composition. The results are given in Table 1.

Comparative Example 5

The procedure in Example 1 was repeated to prepare a molding in the form of sheet and evaluated the same except that there was blended as an additive, a sodium salt of a straight-chain alkanesulfonic acid having 12 carbon atoms in an amount of 0.02% by weight based on the resin composition. The results are given in Table 1.

Table 1

| | Surface resistivity (Ω) | Tensile modulus of elasticity (MPa) | Break strength (MPa) | Break elongation (%) | Surface appearance |
|---|---|---|---|---|---|
| Example 1 | $3 \times 10^{11}$ | 4000 | 110 | 2.9 | O |
| Example 2 | $7 \times 10^{10}$ | 3800 | 105 | 2.9 | O |
| Example 3 | $5 \times 10^{9}$ | 4100 | 103 | 2.5 | O |
| Example 4 | $1 \times 10^{10}$ | 4000 | 107 | 2.8 | O |
| Comparative Example 1 | $1 \times 10^{14}$ | 4000 | 106 | 2.4 | O |
| Comparative Example 2 | $4 \times 10^{14}$ | 4000 | 104 | 2.3 | O |
| Comparative Example 3 | $1 \times 10^{15}$ | 4200 | 101 | 2.5 | O |
| Comparative Example 4 | $8 \times 10^{10}$ | 3000 | 78 | 1.8 | X |
| Comparative Example 5 | $8 \times 10^{14}$ | 4200 | 100 | 2.6 | O |
| Comparative Example 6 | $6 \times 10^{8}$ | 3400 | 83 | 2.1 | X |

Comparative Example 6

The procedure in Example 1 was repeated to prepare a molding in the form of sheet and evaluated the same except that there was blended as an additive, a sodium salt of a straight-chain alkanesulfonic acid having 12 carbon atoms in an amount of 7.0% by weight based on the resin composition. The results are given in Table 1.

Example 5

The powdery styrenic polymer obtained in the above Preparation Example 1 was dried at 150°C for 2 hours with stirring and then incorporated, as an additive, with a polyglyceride-stearic acid triester having a median of glyceride polymerization degree of 6 in its polymerization degree distribution and having an HLB value of 7 (produced by Sakamoto Yakuhin Kogyo Co., Ltd. under the tradename "SY Glystar TS-500") in such an amount as occupies 3% by weight based on the resin composition. The resultant mixture was melt extruded at a melting temperature of 300°C by means of a twin-screw extruder equipped with a die with a plurality of capillaries at the end thereof, cooled and cut off to prepare a composition in the form of pellet. The resultant pellet was crystallized and dried with stirring in hot air. The dried pellet was extruded at a extrusion temperature of 320°C, a shear stress of $3 \times 10^5$ dyne/$cm^2$ by the use of an apparatus equipped with a T-die at the end of a single-screw extruder to prepare a melt extruded sheet, which was then cooled by bringing into close contact with a metallic cooling roll adjusted to 70°C by means of electrostatic charging at a cooling rate of 70°C/sec. to prepare an unoriented sheet with 300 μm thickness. The resultant unoriented sheet was made into an oriented film by consecutive biaxial orientation method by the use of a heating roll and a tenter at a temperature of 105°C and a draw ratio of 3.0 for machine-direction orientation and at a temperature of 110°C and a draw ratio of 3.2 for transverse-direction orientation. Immediately after the transverse-direction orientation, the biaxially oriented film was heat treated at 240°C for 5 to 30 sec. to prepare the prescribed film. The sample film thus obtained was evaluated for surface resistivity, tensile properties, transparency and surface appearance. The results are given in Table 2.

Example 6

The procedure in Example 5 was repeated to prepare an oriented film and evaluated the same except that there was used the powdery styrenic polymer as obtained in Preparation Example 2. The results are given in Table 2.

Example 7

The procedure in Example 5 was repeated to prepare an oriented film, and evaluated the same except that there was blended as an additive, a sodium salt of a straight-chain alkanesulfonic acid having 12 carbon atoms (produced by Toho Chemical Industry Co., Ltd. under the tradename ANSTEX-SAS) in such an amount as occupies 1.5% by weight based on the resin composition. The results are given in Table 2.

Example 8

The procedure in Example 5 was repeated to prepare an oriented film and evaluated the same except that there were used in combination, as additives, 0.1% by weight of a sodium salt of a straight-chain alkanesulfonic acid having 12 carbon atoms and 2.0% by weight of a polyglyceride-stearic acid ester having a median of glyceride polymerization degree of 6 in its polymerization-degree distribution and having an HLB value of 7. The results are given in Table 2.

Comparative Example 7

The procedure in Example 5 was repeated to prepare an oriented film and evaluated the same except that there was blended as an additive, a polyglyceride-stearic acid ester having a median of glyceride polymerization degree of 6 in its polymerization-degree distribution and having an HLB value of 5 in an amount of 3.0% by weight based on the resin composition. The results are given in Table 2.

Comparative Example 8

The procedure in Example 5 was repeated to prepare an oriented film and evaluated the same except that there was blended as an additive, a polyglyceride-stearic acid ester having a median of glyceride polymerization degree of 6 in its polymerization-degree distribution and having an HLB value of 12 in an amount of 3.0% by weight based on the resin composition. The results are given in Table 2.

Comparative Example 9

The procedure in Example 5 was repeated to prepare an oriented film and evaluated the same except that there was blended as an additive, a polyglyceride-stearic acid ester having a median of glyceride polymerization degree of 6 in its polymerization-degree distribution and having an HLB value of 7 in an amount of 0.3% by weight based on the resin composition. The results are given in Table 2.

Comparative Example 10

The procedure in Example 5 was repeated to prepare an oriented film and evaluated the same except that there was blended as an additive, a polyglyceride-stearic acid ester having a median of glyceride polymerization degree of 6 in its polymerization-degree distribution and having an HLB value of 7 in an amount of 7.0% by weight based on the resin composition. The results are given in Table 2.

Comparative Example 11

The procedure in Example 5 was repeated to prepare an oriented film and evaluated the same except that there was blended as an additive, a sodium salt of a straight-chain alkanesulfonic acid having 12 carbon atoms in an amount of 0.02% by weight based on the resin composition. The results are given in Table 2.

<u>Comparative Example 12</u>

The procedure in Example 5 was repeated to prepare an oriented film and evaluated the same except that there was blended as an additive, a sodium salt of a straight-chain alkanesulfonic acid having 12 carbon atoms in an amount of 7.0% by weight based on the resin composition. The results are given in Table 2.

Table 2

| | Surface resistivity (Ω) | Total haze (%) | Tensile modulus of elasticity (MPa) | Break stertength (MPa) | Break elongation (%) | Surface appearance |
|---|---|---|---|---|---|---|
| Example 5 | 3 X $10^{12}$ | 1.6 | 3400 | 108 | 52 | O |
| Example 6 | 8 X $10^{11}$ | 1.3 | 3300 | 104 | 50 | O |
| Example 7 | 6 X $10^{10}$ | 8.7 | 3700 | 94 | 35 | O |
| Example 8 | 1 X $10^{11}$ | 1.0 | 3900 | 102 | 47 | O |
| Comparative Example 7 | 5 X $10^{14}$ | 2.6 | 3600 | 104 | 47 | O |
| Comparative Example 8 | 4 X $10^{14}$ | 2.5 | 3500 | 101 | 42 | O |
| Comparative Example 9 | 1 X $10^{15}$ | 0.8 | 4100 | 110 | 40 | O |
| Comparative Example 10 | 5 X $10^{9}$ | 3.8 | 3000 | 76 | 18 | X |
| Comparative Example 11 | 6 X $10^{14}$ | 2.6 | 4200 | 118 | 41 | O |
| Comparative Example 12 | 8 X $10^{8}$ | 28.1 | 3100 | 85 | 25 | X |

**Claims**

**1.** An antistatic resin composition which comprises 95 to 99.5% by weight of an (A) styrenic polymer having a high degree of syndiotactic configuration and 0.5 to 5.0% by weight of a (B) polyhydric alcohol-fatty acid ester having an HLB value of 6 to 9.

**2.** An antistatic resin composition which comprises 98.5 to 99.9 % by weight of (A) a styrenic polymer having a high degree of syndiotactic configuration and 0.1 to 1.5 % by weight of (C) an antistatic agent consisting of a metallic salt of an organosulfonic acid, which is at least one member selected from the group consisting of a metallic salt of a straight chain alkylsulfonic acid and a metallic salt of a alkylarylsulfonic acid, each having 10 to 20 carbon atoms.

**3.** An antistatic resin composition which comprises 88.5 to 99.475% by weight of an (A) styrenic polymer having a high degree of syndiotactic configuration, 0.5 to 5.0% by weight of a (B) polyhydric alcohol-fatty acid ester having an HLB value of 6 to 9 and 0.025 to 6.5% by weight of a (C) metallic salt of an organosulfonic acid.

**4.** An antistatic oriented film which comprises the antistatic resin composition as set forth in any of claims 1, 2 or 3.

**5.** The antistatic resin composition according to Claims 1 or 3 wherein said ester as the component (B) is a polyglyceride-stearic acid ester having a median of glyceride polymerization degree of 6 in its polymerization degree distribution and having an HLB value of 7 to 8.

**6.** The antistatic resin composition according to Claims 2 or 4 wherein said metallic salt of an organosulfonic acid is at least one member selected from the group consisting of a sodium salt of a straight-chain alkylsulfonic acid having 10 to 20 carbon atoms and a sodium salt of an alkylarylsulfonic acid having 10 to 20 carbon atoms.

7. Use of 0.1 to 1.5 % by weight of an antistatic agent, consisting of a metallic salt of an organosulfonic acid, which is at least one member selected from the group consisting of a metallic salt of a straight chain alkylsulfonic acid and a metallic salt of an alkylarylsulfonic acid, each having 10 to 20 carbon atoms in a resin composition comprising 98.5 to 99.9 % by weight of a styrenic polymer having a high degree of syndiotactic configuration.

8. Use of 0.5 to 5.0 % by weight of a polyhydric alcohol-fatty acid ester having an HLB value of 6 to 9 as an antistatic agent in a resin composition comprising 95 to 99.5 % by weight of a styrenic polymer having a high degree of syndiotactic configuration.

9. Use of 0.5 to 5.0 % by weight of polyhydric alcohol-fatty acid ester having a HLB value of 6 to 9 and 0.025 to 6.5 % by weight of a metallic salt of an organosulfonic acid as antistatic agents in a resin composition comprising 88.5 to 99.475 % by weight of styrenic polymer having a high degree of syndiotactic configuration.

**Patentansprüche**

1. Antistatische Harzzusammensetzung, welche 95 bis 99,5 Gew.-% eines (A) Styrolpolymeren mit einem hohen Grad syndiotaktischer Konfiguration und 0,5 bis 5,0 Gew.-% eines (B) Polyhydroxyalkohol-Fettsäureesters mit einem HLB-Wert von 6 bis 9 umfaßt.

2. Antistatische Harzzusammensetzung, welche 98,5 bis 99,9 Gew.-% eines (A) Styrolpolymeren mit einem hohen Grad syndiotaktischer Konfiguration und 0,1 bis 1,5 Gew.-% eines (C) antistatischen Mittels umfaßt, bestehend aus einem Metallsalz einer Organosulfonsäure, die mindestens eine ist, die ausgewählt wird aus der Gruppe, welche aus einem Metallsalz einer gradkettigen Alkylsulfonsäure und einem Metallsalz einer Alkylarylsulfonsäure besteht, die jeweils 10 bis 20 Kohlenstoffatomen aufweisen.

3. Antistatische Harzzusammensetzung, welche 88,5 bis 99,475 Gew.-% eines (A) Styrolpolymeren mit einem hohen Grad syndiotaktischer Konfiguration, 0,5 bis 5,0 Gew.-% eines (B) Polyhydroxyalkohol-Fettsäureesters mit einem HLB-Wert von 6 bis 9 und 0,025 bis 6,5 Gew.-% eines (C) Metallsalzes einer Organosulfonsäure umfaßt.

4. Antistatischer orientierter Film, welcher die antistatische Harzzusammensetzung wie in einem der Ansprüche 1, 2 oder 3 angegeben umfaßt.

5. Antistatische Harzzusammensetzung nach Anspruch 1 oder 3, wobei der Ester als Komponente (B) ein Polyglycerid-Stearinsäure-Ester mit einem mittleren Glycerid-Polymerisationsgrad von 6 in der Polymerisationsgradverteilung und einem HLB-Wert von 7 bis 8 ist.

6. Antistatische Harzzusammensetzung nach den Ansprüchen 2 oder 4, wobei das Metallsalz einer Organosulfonsäure mindestens ein Bestandteil ist, der ausgewählt wird aus der Gruppe die besteht aus einem Natriumsalz einer gradkettigen Alkylsulfonsäure mit 10 bis 20 Kohlenstoffatomen und einem Natriumsalz einer Alkylarylsulfonsäure mit 10 bis 20 Kohlenstoffatomen.

7. Verwendung von 0,1 bis 1,5 Gew.-% eines antistatischen Mittels, bestehend aus einem Metallsalz einer Organosulfonsäure, die mindestens ein Bestandteil ist, der ausgewählt wird aus der Gruppe, die besteht aus einem Metallsalz einer gradkettigen Alkylsulfonsäure und einem Metallsalz einer Alkylarylsulfonsäure, die jeweils 10 bis 20 Kohlenstoffatomen aufweist, in einer Harzzusammensetzung, welche 98,5 bis 99,9 Gew.-% eines Styrolpolymeren mit einem hohen Grad syndiotaktischer Konfiguration umfaßt.

8. Verwendung von 0,5 bis 5,0 Gew.-% eines Polyhydroxyalkohol-Fettsäureesters mit einem HLB-Wert von 6 bis 9 als antistatisches Mittel in einer Harzzusammensetzung, die 95 bis 99,5 Gew.-% eines Styrolpolymeren mit einem hohen Grad syndiotaktischer Konfiguration umfaßt.

9. Verwendung von 0,5 bis 5,0 Gew.-% Polyhydroxyalkohol-Fettsäureester mit einem HLB-Wert von 6 bis 9 und 0,025 bis 6,5 Gew.-% eines Metallsalzes einer Organosulfonsäure als antistatische Mittel in einer Harzzusammensetzung, die 88,5 bis 99,475 Gew.-% Styrolpolymer mit einem hohen Grad syndiotaktischer Konfiguration umfaßt.

**Revendications**

1. Composition de résine antistatique qui comprend 95 à 99,5 % en poids de (A) un polymère styrénique ayant un

haut degré de configuration syndiotactique et 0,5 à 5,0 % en poids de (B) un ester d'alcool polyhydroxylé-acide gras ayant une valeur de HLB de 6 à 9.

**2.** Composition de résine antistatique qui comprend 98,5 à 99,9 % en poids de (A) un polymère styrénique ayant un haut degré de configuration syndiotactique et 0,1 à 1,5 % en poids de (C) un agent antistatique constitué d'un sel métallique d'un acide organosulfonique qui est au moins un représentant choisi dans le groupe comprenant un sel métallique d'un acide (alkyle à chaîne linéaire)sulfonique et un sel métallique d'un acide alkylarylsulfonique, chacun ayant 10 à 20 atomes de carbone.

**3.** Composition de résine antistatique qui comprend 88,5 à 99,475 % en poids de (A) un polymère styrénique ayant un haut degré de configuration syndiotactique, 0,5 à 5,0 % en poids de (B) un ester d'alcool polyhydroxylé-acide gras ayant une valeur de HLB de 6 à 9 et 0,025 à 6,5 % en poids de (C) un sel métallique d'un acide organosulfonique.

**4.** Film orienté antistatique qui comprend la composition de résine antistatique selon l'une quelconque des revendications 1, 2 ou 3.

**5.** Composition de résine antistatique selon la revendication 1 ou 3, dans laquelle ledit ester à titre de composant (B) est un ester de polyglycéride-acide stéarique ayant une moyenne de degré de polymérisation de glycéride de 6 dans sa distribution de degré de polymérisation et ayant une valeur de HLB de 7 à 8.

**6.** Composition de résine antistatique selon les revendications 2 ou 4, dans laquelle ledit sel métallique d'un acide organosulfonique est au moins un représentant choisi dans le groupe comprenant un sel de sodium d'un acide (alkyle à chaîne linéaire)-sulfonique ayant 10 à 20 atomes de carbone et un sel de sodium d'un acide alkylarylsulfonique ayant 10 à 20 atomes de carbone.

**7.** Utilisation de 0,1 à 1,5 % en poids d'un agent antistatique, constitué d'un sel métallique d'un acide organosulfonique qui est au moins un représentant choisi dans le groupe comprenant un sel métallique d'un acide (alkyle à chaîne linéaire)sulfonique et un sel métallique d'un acide alkylarylsulfonique, chacun ayant 10 à 20 atomes de carbone, dans une composition de résine comprenant 98,5 à 99,9 % en poids d'un polymère styrénique ayant un haut degré de configuration syndiotactique.

**8.** Utilisation de 0,5 à 5,0 % en poids d'un ester d'alcool polyhydroxylé-acide gras ayant une valeur de HLB de 6 à 9, à titre d'agent antistatique, dans une composition de résine comprenant 95 à 99,5 % en poids d'un polymère styrénique ayant un haut degré de configuration syndiotactique.

**9.** Utilisation de 0,5 à 5,0 % en poids d'un ester d'alcool polyhydroxylé-acide gras ayant une valeur de HLB de 6 à 9, et de 0,025 à 6,5 % en poids d'un sel métallique d'un acide organosulfonique, à titre d'agents antistatiques, dans une composition de résine comprenant 88,5 à 99,475 % en poids de polymère styrénique ayant un haut degré de configuration syndiotactique.